# EUROPEAN PATENT APPLICATION

(11) **EP 4 501 457 A1**
(43) Date of publication of application: **05.02.2025**
(21) Application number: 23189825.5
(22) Date of filing: 04.08.2023
(51) Int. Cl.: B01L 3/02, G10L 15/00

(54) **SPEECH CONTROLLED SYSTEM INCLUDING A LIQUID HANDLING DEVICE AND A COMPUTER DEVICE**

(71) Applicant: Eppendorf SE, 22339 Hamburg (DE)
(72) Inventor: BONDESSON, David, 22303 Hamburg (DE); PETERMANN, Alexander, 22391 Hamburg (DE); KAYSER, Philipp, 20535 Hamburg (DE)
(74) Representative: Wallinger Ricker Schlotter Tostmann

(57) **Abstract**

The invention is related to a system for performing a voice control of at least one liquid handling device using a computer device and a microphone device, the liquid handling device and the computer device, as well as related methods and computer program codes.

## Description

The invention is related to a system for performing a voice control of at least one liquid handling device using a computer device and a microphone device, the liquid handling device and the computer device, as well as related methods and computer program codes.

A liquid handling device is a laboratory instrument that is used to dispense, transfer, or otherwise manipulate small volumes of liquid with a high degree of accuracy and precision. These devices are commonly used for laboratory work in many scientific fields and respective laboratories, such as chemistry, biology, and medical research, for tasks such as pipetting, diluting, mixing, and dispensing of samples and reagents. There are different types of liquid handling devices, ranging from hand-held pipettes and hand-held multi-channel pipettes to automated liquid handling systems that can handle multiple samples simultaneously, in particular by using a robot system for manipulating the samples and sample vessels during complex automated experiments. Programmable liquid handling devices provide one or more of the features of programmability, dispensing automation, and liquid level sensing, which can improve the efficiency and reproducibility of experiments.

A programmable pipette device is a type of liquid handling device that is designed to automate pipetting tasks. Programmable pipette devices, in particular hand-held pipette devices, are typically equipped with a data interface and/or a user interface that allows the user to specify pipetting parameters, which determine a pipetting process to be automatically performed by the programmable pipette. Pipetting parameters typically include any of the volume of liquid to be dispensed, the number of dispensing steps, the speed of aspirating and/or dispensing the sample to/from a pipetting tip, and other parameters related to, for example, mixing and diluting. Programmable pipettes can be used in a wide range of applications, including sample preparation, assay development, and high-throughput screening. Moreover, programmable pipettes can be integrated with laboratory automation systems, allowing for improved throughput and experimental control.

A known bottleneck for improving the efficiency of hand-held programmable pipette devices is the limited capability of the user interfaces of known pipettes. A user interface is required for operating the pipette, in particular for setting pipetting parameters. Since the pipette device is, in many cases, a hand-held device, which is held by one hand of the operator, using the same hand for operating the user interface is impeded. Since the other hand is often required for other manual tasks during a laboratory experiment, for example for holding a sample container, there is a need for an efficient and ergonomic user interface being usable under such conditions.

A speech recognition system is directed to recognizing and interpreting spoken language and convert it into text or commands that a computer can understand. Such systems are not to be confused with a "voice recognition system", which is a type of technology that is known to be designed for identifying and authenticating a person based on their unique voiceprint. Such voice recognition systems are commonly used in security systems, such as voice-activated access controls or biometric identification systems, where the system needs to verify the identity of the speaker. In the context of the present invention, both terms "speech recognition" and "voice recognition" are used to describe technology for converting spoken language into text or commands.

Using a speech recognition system for operating a laboratory device is generally known. For example, the document EP1438138B1 describes a pipette, which includes a voice recognition system (VRS) that decodes verbal commands and outputs the result to a central processing unit of the pipette which in turn generates electronic drive signals. For implementing such a technology, the data processing capabilities of the pipette must be powerful, resulting in an expensive pipette having a relatively high energy consumption. Another disadvantage of a pipette including a VRS, as found by the inventors of the present invention, is that an operator tends to turn his mouth towards the pipette's microphone, in order to optimize the voice recognition quality. This was found to increase the risk of contaminating a pipette and the samples treated by the pipette, which is a clear disadvantage when working with biological analytes.

Speech recognition systems are known to be commonly used in voice-activated smart home devices and in voice control interfaces of automobiles. Such systems use continuous acoustic monitoring to detect voice commands in a room by constantly listening for and collecting audio data, which leads to privacy issues. While the data is typically stored locally on a device or in the cloud, there have been instances where the data has been accessed or compromised by unauthorized parties. Such a technology is inacceptable in research laboratories, where any spoken exchange of highly valuable information must remain confidential.

The object underlying the present invention is therefore to find a system, and suitable components thereof, for performing a voice control of at least one liquid handling device, in particular of a handheld pipette device, which provides a safe and efficient usability.

The system and its components according to the invention, including the pipetting device and the computing device, combine the high usability of a speech recognition with a safe and field-tested activation function. The microphone device and the activation device (the actuation device) are capable to be positioned at different locations, because the microphone device is not part of the pipetting device, which contains the activation device. Users are thus released from the obligation to speak in the direction of the pipette. Moreover, arranging the actuation device as a part of the pipette device allows for a safe activation of the speech recognition system under manual control of an operator. This way, a continuous monitoring of voice commands in a room can be avoided, which improves privacy of spoken information in a laboratory. Since the computing device, which runs the speech recognition procedure, is not part of the pipette device, the cost of the pipette device and its energy consumption can be kept low, leading to an increased operating time of the battery powered pipette device and improved lifetime of the pipette device. The computing device may be a dedicated and optimized device for running a speech recognition procedure. It may be located on premises of the owner of the pipette device, and may be located in the same room or even in another room. This way, the data privacy may be improved - compared to a cloud based solution where the speech recognition is located in the cloud, which means on an external server, which may be located on premises of a service provider offering high quality speech recognition. However, using a cloud based speech recognition system / procedure is also possible and preferred for implementing the invention.

In addition to the description of **liquid handling devices** in further passages of this patent application, a liquid handling device may be a handheld pipette device. A handheld pipette device is a portable laboratory instrument that is designed to be held and operated by hand, allowing users to manually aspirate and dispense precise volumes of liquids. A handheld pipette device may typically include one or more or all of the following components: a pipette body, in particular having a grip section for allowing a hand to hold the pipette device and/or having a connection section, in particular working cone, for coupling a pipetting container, in particular a pipette tip or a dispenser tip, to the pipette device or respectively to a pipetting channel of the pipette device; a movable rod and/or a piston; a mechanical device for driving the movable rod /piston; an electrical motor for moving the plunger/piston; a volume adjustment mechanism, which may be mechanically and/or electronically controlled; an actuation member, for example a rocker switch, for manually, in particular by a finger of the hand, initiating a pipetting operation, in particular for aspirating or releasing a liquid sample into/from a pipette or dispenser tip, one or more actuation member for detecting a user input and being configured to activate a function of the pipette device or to allow a user input to the pipette device; a connection section, in particular working cone, for coupling a pipetting container, in particular a pipette tip or a dispenser tip, to the pipetting channel; a tip ejector; an electrically operated user interface, in particular including a display, in particular a touch screen; a battery and/or secondary battery for providing electrical power of at least one electrically operated part of the handheld pipette device, such part being, for example, the electric control device of the handheld pipette device, one or more actuation members for providing a user input, the electrical motor. The electric control device is preferably a programmable device.

The volume adjustment mechanism of mechanical pipettes is often located near the top of the pipette, that allows users to adjust and set the desired volume of liquid to be aspirated and dispensed. It may involve a rotating dial or other mechanisms, depending on the specific mechanical pipette model. The volume adjustment mechanism of a programmable electronical pipette is typically implemented as a programming of the pipettes electrical control device, which controls the electric motor and therefore also the movable rod /piston.

A handheld pipette device is typically configured to pipette sample volumes of different volume ranges, from microliters (*µ*L) to milliliters (mL). They offer a precise and controlled liquid handling solution for tasks such as pipetting samples, reagents, or buffers in laboratory experiments, sample preparation, and various other applications.

A liquid handling device may be a robot pipette device, which is typically a programmable pipette device. A robot pipette device is an automated system for moving a pipette tip/dispenser tip with the help of one or more electrical motors instead of moving the same manually. The operating of the robot pipette device is typically performed under program control, wherein an electronic control device of the robot pipette device is capable to control the one or more electrical motors. The robot pipette device may be configured to automatically move the pipette tip/dispenser tip along at least one or any direction of a Cartesian coordinate system (x, y, z axis). It may be alternatively or additionally configured to move one or more sample container relative to the pipette tip/dispenser tip. A robot pipette device may be an automated pipetting system that incorporates automation capabilities, such as robotic arms, to perform pipetting tasks. It can handle multiple samples simultaneously and often integrates with other laboratory equipment. A robot pipette device may be a liquid handling workstation, which is a modular system that combines various liquid handling modules, such as pipetting units, plate handlers, and other functionalities like heating/cooling or shaking. A liquid handling workstation is typically used for complex pipetting workflows.

The actuation device is, in particular, configured to let a user activate the speech control input mode, in particular by manual actuation of the actuation device. The actuation device is, in particular, configured to let a user initiate the speech recognition procedure by letting the electrical control device provide the start signal, in particular by manual actuation of the actuation device.

The actuation device, preferably, is configured to be activated by a finger of a user's hand, in particular the same hand which holds a handheld pipette device, which is useful for the preferred embodiment of the handheld pipette device for one-hand operation. The actuation device is preferably arranged on a housing of a liquid handling device, in particular on a pipette body.

The actuation device preferably is a dedicated device. A dedicated device refers to a physical device, in particular a button, on a liquid handling device that is specifically assigned or designated for a particular function or feature. Unlike general-purpose buttons that can be used for multiple functions or actions depending on the context or depending on an input mode of the liquid handling device, a dedicated device is intended for a specific purpose and remains consistent in its functionality. A dedicated device, in particular button, is useful to provide quick access to the frequently used feature of a speech control input mode. A dedicated device offers convenience and ease of use by allowing users to directly trigger a specific function without navigating through menus or on-screen controls.

Preferably, the actuation device is marked, e.g. by a contrasting color, and/or is labeled or symbolized to indicate its assigned function, in particular by showing a microphone symbol. This allows an intuitive way of learning to use the functionality of a speech control input mode.

The actuation device may include a push button. A push button includes a mechanism where pressing the button completes an electrical circuit, triggering a specific action or function. The actuation device may include a tactile button. A tactile button provides a physical feedback when pressed, giving the user a sense of confirmation. A tactile button typically has a small travel distance and a distinct click or tactile response. The actuation device may include a membrane button. A membrane button consists of a thin, flexible membrane, typically with a printed symbol or icon. When pressed, the membrane deforms and makes contact with a conductive layer beneath, completing the circuit.

The actuation device may include a rocker switch. A rocker switch has a rocking mechanism that allows the user to toggle between two or three states. The switch rocks back and forth between to states, preferably indicating the current state visually or through tactile feedback. The actuation device may include a slider switch. A slider switches has a slider mechanism that moves along a track or groove to change the position or state of the switch. The actuation device may include a toggle switch. A toggle switch has a lever or a flip mechanism that toggles between two states: on/off or open/closed. The actuation device may include a rotary encoder. A rotary encoder is an input device that allow users to rotate a knob or dial to provide input.

An actuation device, in particular a push button or rocker switch, may be spring biased to return to its starting position when the switch is released by the user. Preferably, the electric control device is configured/programmed to let the speech control input mode remain activated as long as the actuation device remains activated by the user action, and to end the speech control input mode when the actuation device is released by the user, in particular when the spring returns the actuation device to its initial position.

The actuation device, preferably, is a touch sensitive member. The touch sensitive member may be a dedicated device or may be implemented by a multipurpose device, and/or may be implemented by a touch screen, in particular a capacitive sensing screen. Preferably, the electric control device of the liquid handling device is programmed to show a graphic representation of the actuation device on the touch screen, wherein the area of the graphic representation is programmed to act as the input field for detecting at least one touch of a user's finger, in particular for detecting the start, activation and/or end of the speech control input mode.

The touch sensitive member may also be a device using any of the following: Capacitive touch sensing; Resistive touch sensing; Inductive touch sensing; Optical touch sensing; Acoustic touch sensing; Piezoelectric touch sensing; Force Sensing Resistor (FSR).

Preferably, the actuation device is arranged, in particular mounted or integrated, at/in the microphone device, or is connected to the microphone device, in particular by a cable connection.

The actuation device may also be a stand-alone device, which may be connected to the computer device by a wireless connection. The stand-alone device, in particular, may have its own energy supply, in particular a battery, and/or has its own microcontroller. For example, the actuation device may be comprised by -or may be- a wearable device, which may be configured to be worn on a hand, for example by being implemented in a glove device, wristlet, or finger ring. In such an embodiment, a user may hold the liquid handling device in one hand while being able to activate the actuation device with this hand or the other hand, even if this hand already carries the liquid handling device or another object, for example a sample container. The actuation device may be configured to be actuated by the same hand which carries the wearable device, or by the other hand. Moreover, the wearable device can be configured to be worn on any body part to which it is designed to be connected, for example the head, an arm, or a hand. The wearable device may be any of the following: a pair of glasses, clothing, necklace, belt, watch, an adhesive bandage for the skin or other surface, a body implant.

The actuation device may also be a handheld device different from the liquid handling device.

Preferably, the electric control device of the liquid handling device, which is also referred to as "electrical control device", is configured and/or programmed to provide a feedback signal to the user for indicating the activation of the speech control input mode.

Preferably, the system, the microphone device, the computing device, and/or the liquid handling device, in particular the handheld pipette device, or any other device of the system includes a speaker; preferably the feedback signal is provided as an audio signal output by the speaker.

Preferably, the system, the microphone device, the computing device, and/or the liquid handling device, in particular the handheld pipette device, or any other device of the system includes a visual output device, for example a light source; preferably the feedback signal is provided as a visual signal, which is output by the visual output device. The visual output device may include a display or an output area within said display. The visual output device may include an electrochromic polymer, where a variation of a voltage applied to the electrochromic polymer alters its optical properties. The visual output device may be integrated into the actuation device, for example by using a button acting as a light source.

The wireless network adapter of the liquid handling device is configured for exchanging data by wireless connection. The wireless network adapter of the liquid handling device is configured for connecting the liquid handling device with a wireless network adapter of a computer device. The wireless network adapter is a hardware, including, in particular, integrated circuitry, which is configured for exchanging data within a wireless network, in particular a WLAN network, in particular a WiFi network, implementing, for example, WiFi STA, WiFi AP or WiFi STA+AP. The wireless network adapter may be a stand-alone module connectable to a liquid handling device or a computer device, or may be integrated into a computing device, in particular into a microcontroller of a liquid handling device or computer device. Preferably a wireless network adapter contains an antenna for sending/receiving data by radio data transmission at suitable radio frequencies.

The wireless network adapter is capable to transfer, via the wireless connection, the start signal to the computer device for starting the speech recognition procedure at the computer device and to receive control data. The control device of the liquid handling device is programmed, and the wireless network adapter of the liquid handling device is capable to receive the control data and to control the at least one function of the liquid handling device depending on the control data. The liquid handling device or multiple liquid handling devices may form a wireless network with the computer device, and in particular the microphone device, which may include a wireless network adapter.

A wireless network is a computer network that uses wireless data connections between network nodes. Wireless networking is a method by which data processing instances avoid the costly and, often, unsuitable use of cables. Examples of wireless networks include cell phone networks, wireless local area networks (WLANs), ad-hoc networks. A wireless LAN (WLAN) is a wireless computer network that links two or more devices using wireless communication to form a local area network (LAN) within a limited area such as a laboratory, campus, or office building. This gives users the ability to move around within the area and remain connected to the network. Through a gateway, a WLAN can also provide a connection to the wider Internet. Wireless LAN (WLAN) network is preferably based on the IEEE 802.11 standards, as is typically the case. These are commonly called Wi-Fi, which is a trademark belonging to the Wi-Fi Alliance. They are also used for home and small office networks that link together laptop computers, printers, smartphones with a wireless router, which links them to the internet. The wireless network may be provided by an access point device, which has a wireless network adapter and which is separate to the computer device, or by the computer device.

The computer device and/or the at least one liquid handling device participating in the same wireless network preferably represent a so-called service set. In IEEE 802.11 wireless local area networking standards (including Wi-Fi), a service set is a group of wireless network devices which share a service set identifier (SSID)-typically the natural language label that users see as a network name. For example, all of the devices that together form and use a Wi-Fi network called "company-net" are a service set. A service set forms a logical network of nodes operating with shared link-layer networking parameters; they form one logical network segment. The service set identifier (SSID) defines a service set or extended service set. An SSID is preferably customizable. These SSIDs can preferably be zero to 32 octets (32 bytes) long, and are, for convenience, usual preferably in a natural language, such as English.

The computer device may be programmed to provide a wireless network being identified by a network identifier. The network identifier unambiguously may identify the wireless network within a possible plurality of other wireless networks. The network identifier may be any code suitable for identifying the wireless network.

The computer device, preferably, is programmed to automatically connect a liquid handling device to the wireless network using the network identifier and, in particular, using a passphrase, without the need for any user interaction for establishing said connection. The control device of the liquid handling device, preferably, is programmed to automatically connect the liquid handling device to the wireless network provided by the computer device using the network identifier and, in particular, using a passphrase, without the need for any user interaction for establishing said connection. Such a configuration of the system is suitable for enabling an automated exchange of service data between the liquid handling device and the computer device.

The computer device is preferably programmed to authenticate the at least one liquid handling device, which has the network identifier stored in a data storage of the liquid handling device and which is connecting to the wireless network using the network identifier, and in particular, using a passphrase, for permitting the connection of the liquid handling device to the wireless network.

Authentication, in the context of the invention, is a process of proving that a liquid handling device has the right to access the wireless network at the computer device. It is preferably a Single-Factor authentication. On this authentication system, the liquid handling device has to know the network identifier and, preferably, the respective passphrase (password), to allow the liquid handling device entering the wireless network. Now if the correct network identifier is not known by the liquid handling device or if the password is wrong, then the liquid handling device will not be allowed to access the wireless network. A password is a secret string that is supposed to be known only to the pipette device being allowed to access the wireless network and to the access point device verifying said access.

The network identifier may be advertised by the computer device or the access point device or may be not advertised. In case of a service set, the computer device or access point device may advertise its presence several times per second by broadcasting beacon frames that carry the network identifier (SSID). Liquid handling devices may discover a computer device or an access point device by passively listening for beacons, or they can send probe frames to actively search for a computer device or an access point device with the desired SSID. Once the liquid handling devices locates an appropriately-named computer device or access point device, it can send an associate request frame containing the desired SSID. The computer device or the access point device may reply with an associate response frame, also containing SSID.

The computer device or the access point device may use any authentication type and can use more than one at the same time, for example: Open Authentication to the Access Point; Shared Key Authentication to the Access Point; EAP Authentication to the Network; MAC Address Authentication to the Network; Combining MAC-Based, EAP, and Open Authentication; Using CCKM for Authenticated Clients; Using WPA Key Management. Preferably it is a shared key authentication to comply with the IEEE 802.11b standard.

The computer device or the access point device is preferably programmed to provide the transfer of the start signal and the control data between the liquid handling device and the computer device/ the access point device.

The electronic control device (also referred to as electric/al control device or control device) is a part of the liquid handling device and is preferably a programmable device. It may comprise a data processing apparatus, in particular a computer unit (CPU) for processing data and/or a microcontroller, or said control device is a data processing apparatus. A control device may be part of a microcontroller or include a microcontroller. The control device is configured, in particular programmed, to control functions of the liquid handling device, in particular the automatic or semi-automatic performance of a pipetting process, which is defined by at least one program parameter. The control device is configured, in particular programmed, to define at least one program parameter, or multiple program parameters by using the control data received from the computer device. The liquid handling apparatus is configured to allow a user to define at least one program parameter using the speech control input mode and the speech recognition procedure. The control device may comprise a data storage. The data storage device is configured, in particular, for non-volatile (permanent) storage of data. A data storage device may also be configured for volatile data storage.

The liquid handling device may include a user interface apparatus, which preferably includes any of a display, preferably a touch screen, and or at least one input device for detecting a user input, for example a key, button, switch, contact sensor or a keyboard; electronics and/or electronic circuitry, the actuation device. While the actuation device is preferably used, or used only, for starting/activating the speech control input mode, the further parts of the user interface apparatus may be used to define at least one program parameter or to manually control, e.g. start and/or stop, a pipetting process (which means aspirating and/or releasing / dispensing the sample from a pipetting container mounted to the liquid handling device).

The computer device is, in particular, a programmable device for automatically executing functions which are controllable by a (program) software. A computer device generally comprises, in particular, a data processing apparatus, in particular a computer unit (CPU) for processing data and/or a microprocessor, or said computing device is a data processing apparatus. A computer device may be part of a microcontroller or include a microcontroller. The computer device may comprise a data storage. The data storage device is configured, in particular, for non-volatile (permanent) storage of data. A data storage device may also be configured for volatile data storage.

The microphone device preferably is capable to detect user speech, the user speech containing information for controlling at least one function of the liquid handling device, the detection being capable to run the speech recognition procedure, which is a program controlled procedure and which
- records a user speech using the microphone device, the user speech containing information for controlling at least one function of the liquid handling device,
- recognizes at least one function command from the user speech and
- outputs control data depending on the at least one function command.

The microphone device preferably comprises a data storage and/or a data processing device, which may be programmed for recording an/or store a data file containing the sound wave, which represents the user speech as detected by the microphone, in the data storage. However, it is also preferred that the recording of the sound wave is performed by the computer device.

The microphone device preferably is configured for capturing audio in room environments, in particular, in a laboratory.

The microphone device preferable comprises at least one microphone. The microphone may be any of: a condenser microphone; a dynamic microphone; a boundary microphone, also known as PZM (Pressure Zone Microphone); a shotgun microphone; an array microphones consisting of multiple microphone capsules arranged in an array configuration; a wireless microphone.

The microphone device may be connected to the wireless network. The microphone device may be connected to the computer device by a wired or a wireless connection.

The approach according to the invention even allows using more than one, in particular multiple microphone devices, which may be located at different positions, respectively.

This may be used for collecting more than one sound wave of the same spoken information.

Programming of the liquid handling device:
The electronic control device is programmed to
- detect an actuation of the actuation device caused by a user action, the user action including applying a pressure to the actuation device in case of a pressure sensitive actuation device, the user action including contacting a sensor field of the actuation device in case of a contact sensitive actuation device (e.g. in case of a capacitive detection), the user action including displacing a movable member of the actuation device in case of a mechanical actuation device.

The electronic control device is programmed to
- activate, in response to detecting the actuation, a speech control input mode, wherein the speech control input mode is a status during which a speech recognition procedure may be activated at the computer device, at least if there is a sound wave recorded (in case of silence or a too short or otherwise defective sound wave no speech recognition procedure may be activated), to detect a speech input for controlling at least one function of the liquid handling device and during which the control device is capable to receive control data from the remote computer device.

The term "speech control input mode" refers to a status of the liquid handling device and its control device, during which a speech recording is possible and during which control data can be received from the computer device, and during which the control data can be used by the control device to define a program parameter or a part of the program parameter.

The electronic control device is programmed to
- provide, in response to detecting the actuation, a start signal and send, via the wireless connection, the start signal to the computer device for starting the speech recognition procedure at the computer device.

The start signal may be start data, which are transferred by a wireless data connection, or may be another signal, which can be transferred by a wireless connection, for example a radio transmission of an analog signal. The start signal, in particular the start data or analog signal, may be uniquely defined to allow the computer device to unambiguously receive the information, which triggers the speech recognition procedure, and possibly, any associated procedure assisting the speech recognition procedure. The associated procedure may be a program to detect of the sound wave is corrupt, too short or otherwise defective, may be a normalizing procedure to adapt the amplitude level of the sound wave or other audio characteristics of the sound wave, and/or a program to merge different sound waves obtained from multiple microphones in order to optimize the sound quality.

Programming of the computer device:

The computer device is programmed to
* receive the start signal via the wireless connection,
* be triggered by the start signal to start the speech recognition procedure.

The speech recognition procedure is a computer program, or respectively, a program controlled procedure, which
- records a user speech using the at least one microphone device, the user speech containing information for controlling at least one function of the liquid handling device,
- recognizes at least one function command from the user speech and
- outputs control data depending on the at least one function command.

### Speech recognition procedure:

Speech recognition procedures, also known as automatic speech recognition (ASR) or voice recognition, is a technology that converts spoken language into written text or commands. The technology is generally known. It involves a series of steps to accurately transcribe and understand spoken words. The speech recognition procedure may be programmed to include at least one or all of the following programmed steps:
- Audio Capture: The procedure may begin by capturing the audio input containing the spoken speech as a sound wave using the microphone device.
- Pre-processing: The captured audio may then be pre-processed to remove background noise, normalize the volume, and enhance the quality of the speech signal. This step helps improve the accuracy of the speech recognition system.
- Feature Extraction: In this step, the pre-processed audio is transformed into a sequence of acoustic features that represent different aspects of the speech signal. Commonly used features include Mel-Frequency Cepstral Coefficients (MFCCs) or filter banks.
- Acoustic Modeling: Acoustic modeling involves training a statistical model that maps the extracted acoustic features to phonetic units or sub-word units. This model captures the relationship between the acoustic characteristics of the speech and the corresponding linguistic units.
- Language Modeling: Language modeling focuses on the statistical analysis of language patterns and probabilities. It helps the speech recognition system understand and predict the most likely sequence of words given the context. Language models are built using large corpora of text data.
- Decoding: In the decoding stage, the acoustic and language models are used together to find the most likely sequence of words that match the input speech. This involves comparing the acoustic features to the models and selecting the most probable word sequence.
- Post-processing: Once the decoding process is complete, post-processing techniques may be applied to refine the recognized text. This can involve grammar checking, spell checking, and language-specific post-processing rules.
- Output: The final output of the speech recognition procedure is the recognized text or commands derived from the spoken input, forming the control data.

The recognized text may be automatically converted in a proper command, which may be done by using a table of data, which correlates the recognized text to a desired command, wherein said table may be stored in a data storage of the computing device or connected to the computing device. The desired command may be a suitable for program-controlled calling a specific function at the control device, for example
- a command used by the control device to switch the screen content shown in a display of the liquid handling device, and/or a command for navigating through the pages of a user interface of the liquid handling device;
- a command used by the control device to start or stop a pipetting process, or to switch off the power of the liquid handling device;
- a command used by the control device to call a pre-defined or user defined and pre-stored method;
- a command used by the control device to eject a pipetting tip connected at a working cone of the liquid handling device.

According to a preferred embodiment, a speech control input mode is activated in response to detecting the actuation. With the activation of the control input mode, a speech recognition procedure is activated at a remote computer device to detect/listen for a speech input for controlling at least one function of the liquid handling device. During the detect/listening phase the control device is capable to receive control data from the remote computer device.

According to a preferred embodiment, the speech recognition procedure uses a recognition algorithm for recognizing at least one function command and for outputting the control data depending on at least one function command, the recognition algorithm can include solutions such as one or more neural networks, transformer architectures, hidden Markov machines, other probabilistic prediction models or any combination of the above mentioned.

According to a preferred embodiment, the speech recognition procedure is programmed to recognize a function command taken from the group of preselected function commands including:
- setting a pipetting parameter, which may be any of the following parameters: a pipetting volume, a pipetting volume to be aspirated, a pipetting volume to be dispensed, a number of pipetting steps, a pipetting speed, a number of prewetting steps, a prewetting volume, a number of mixing steps, ....
- setting a digit, including any digit from 0, 1, ...9
- setting a number, including numbers with multiple digits
- switching of a liquid handling device
- ejecting a pipette tip from a working cone of the liquid handling device
- recording a spoken note to an electronic laboratory notebook, which may be a program of the computer device or another computing device of the system to protocol the user's experiment (the experiment being defined as the pipetting processes executed by the liquid handling device under the control of the user, including the definitions of program parameters, including any of the sound waves and/or control data and/or the values extracted from the control data for defining a program parameter).

According to a preferred embodiment, a method is provided comprising the computer implemented steps executed by the computer device to
* receive a start signal via the wireless connection,
* be triggered by the start signal to start a speech recognition procedure, which is a program controlled procedure and which,
   - records a user speech using a microphone device connected to the computer device, the user speech containing information for controlling at least one function of the liquid handling device,
   - recognizes at least one function command from the user speech and
   - outputs control data depending on the at least one function command,
* send the control data to the liquid handling device via a wireless connection for controlling the at least one function of the liquid handling device depending on the control data.

In general, a speech recognition procedure suitable to be used with the present invention may be based on a commercially available software solution. A commercially available speech recognition system, which allows to easily implement the speech recognition procedure mentioned in the claims, can be described as follows:
A speech recognition system may be implemented on a computer device using an (Internet) connection of the computer device with an external computation server (Cloud based solution). Novel voice and audio classification systems use mainly Deep Learning (DL) methods such as recurrent neural networks (RNN) [Swedia, E.R., Mutiara, A.B., Subali, M., Ernastuti: Deep learning long-short term memory (LSTM) for indonesian speech digit recognition using LPC and MFCC feature. In: International Conference on Informatics and Computing (ICIC). Pp. 1-5. IEEE (2018)], convolutional neural networks (CNN) [ Becker, S., Ackermann, M., Lapuschkin, S., Müller, K., Samek, W.: Interpreting and explaining deep neural networks for classification of audio signals. CoRR (2018), http://arxiv.org/abs/1807.03418] or transformer networks [Araabi, A., Monz, C.: Optimizing transformer for low-resource neural machine translation. In: Scott, D., Bel, N., Zong, C. (eds.) Proceedings of the 28th International Conference on Computational Linguistics. pp. 3429-3435. International Committee on Computational Linguistics (2020), https://doi.org/ 10.18653/v1/2020.coling-main.304] to extract and develop features. Such DL solutions take benefit of the computational power of external servers [Devlin, J., Chang, M., Lee, K., Toutanova, K.: BERT: pre-training of deep bidirectional transformers for language understanding. In: Burstein, J., Doran, C., Solorio, T. (eds.) Proceedings of the 2019 Conference of the North American Chapter of the Association for Computational Linguistics: Human Language Technologies. pp. 4171-4186. Association for Computational Linguistics (2019), https://doi.org/10.18653/v1/n19-1423] [Dhar, P.: The carbon impact of artificial intelligence. Nat. Mach. Intell. 2(8), 423-425 (2020), https://doi.org/10.1038/s42256-020-0219-9].

However, a speech recognition system/procedure may also be adapted using a computer device, which is not connected to the Internet (offline solution). Such offline solutions may be specifically adapted to be executable by limited computational power. The document "Implementation of Speech-based Digit-Recognition for Resource-Constrained Environments", Tim Kraienhorst, 2022, Institute of Microsystems Technology (www.tu-harburg.de/mst), Eppendorf AG (now: Eppendorf SE), describes a prototype implementation for a spoken digit classification on CPUs, representing a first step to implement spoken command classification for changing device settings. Hardware and chip architecture independent reduction techniques were utilized to port a digit classification to a dual-core cortex A7 processor of a STM32MP157C. A spoken digit classification algorithm was proposed via a CNN framework and a MobileNetV3 backbone along with optimization techniques to increase its robustness and reduce resource requirements. This enabled a classification with the ability to scale its capacity via a single parameter α. Additionally, a high accuracy was maintained through the application using primarily efficient quantization and knowledge distillation. Furthermore, data augmentation was utilized to increase the classification accuracy on the embedded device. This approach decreased the test set accuracy by 0.7 percentage points, while reducing the CNN's size by more than 34× to 107.78 kB, compared to a standard MobileNetV3 small.

In general, a speech recognition system, also known as an automatic speech recognition (ASR) system, is a technology that uses machine learning or other probabilistic models with natural language processing techniques to recognize and transcribe spoken language into text. The goal of speech recognition is to accurately convert spoken words and phrases into written text, which can then be further processed and analyzed by a computer. There are several technical approaches that can be used to implement automatic speech recognition systems, for example Hidden Markov Models (HMMs), Deep Neural Networks (DNNs), Convolutional Neural Networks (CNNs), Recurrent Neural Networks (RNNs), Gaussian Mixture Models (GMMs).

There are several commercial products that use one or more of said techniques for speech recognition. Such products allow algorithms of a speech recognition procedure to be implemented in the computer device of the present invention. Commercially available products include, for example:
- Kaldi (https://kaldi-asr.org) is an open-source toolkit for speech recognition that can be used to build custom speech recognition models. Kaldi is written in C++ and licensed under the Apache License v2.0. It includes a wide range of acoustic and language models that can be used to recognize speech in a variety of languages, as well as tools for building and training new models.
- TensorFlow Speech Recognition (https://www.tensorflow.org): This is an open-source project that provides a set of pre-trained models for speech recognition using TensorFlow. It includes models for recognizing speech in a variety of languages, as well as tools for building and training new models. TensorFlow can even create speech recognition procedures running on computer devices having a relatively low computational power, for example a Raspberry Pi.

TensorFlow Speech Recognition uses a combination of Convolutional Neural Networks (CNNs) and Recurrent Neural Networks (RNNs) to extract features from the audio input and perform sequence modeling to recognize spoken words.

The basic pipeline of TensorFlow Speech Recognition involves the following steps:
1. Audio preprocessing: The raw audio input is preprocessed to extract features that are relevant for speech recognition, for example the spectrogram and Mel-frequency cepstral coefficients (MFCCs). These features are then normalized to improve the performance of the neural network.
2. Convolutional neural network (CNN): The preprocessed audio features are input into a CNN, which learns to extract higher-level features that are relevant for speech recognition. The output of the CNN is a sequence of feature maps that capture the temporal and spectral structure of the audio.
3. Recurrent neural network (RNN): The sequence of feature maps from the CNN is fed into an RNN, such as a Long Short-Term Memory (LSTM) network, which learns to model the temporal dynamics of the speech signal. The output of the RNN is a sequence of hidden states that capture the context and history of the speech input
4. Fully connected layers: The output of the RNN is then fed into one or more fully connected layers, which learn to map the hidden states to a sequence of output probabilities over the vocabulary of words..
5. Decoding: The final output is a probability distribution over the possible words that could be spoken. This probability distribution is then decoded using a decoding algorithm, such as the beam search algorithm, to obtain the most likely sequence of words that corresponds to the input speech.

The pre-trained models provided by TensorFlow Speech Recognition can also be finetuned on new datasets or customized to work with any use cases of controlling a pipetting device. The project also provides tools for data preparation, model training, and evaluation, as well as examples of how to use the models in real-world applications.

It is possible to use TensorFlow Speech Recognition to build an ASR system that can run offline on a local computer, provided that the appropriate hardware resources are available. This would involve training a custom model on a local dataset and deploying it to the local computer for inference.

There are also other ASR libraries and frameworks that are designed to run offline on local devices with limited resources, such as the Kaldi toolkit and the Mozilla Deep-Speech project based on Tensorflow Lite.

The computer device is programmed to send the control data to the liquid handling device via a wireless connection, and the control device of the liquid handling device being programmed to receive the control data and to control the at least one function of the liquid handling device depending on the control data.

In case that the control data contain one or more numbers, the control device is programmed to define, using said one or more numbers, a program parameter, for example a sample volume to be aspirated, a sample volume to be released or dispensed, a number of dispensing steps, a pipetting speed, a time, an identification number for choosing a preprogrammed method or for calling a pre-stored method, a method containing the definition of one pipetting process or multiple pipetting processes in a sequence.

Embodiments and further subject matter of the invention:
The computer device is arranged remote from the at least one liquid handling device, which means that both, the computer device and the at least one liquid handling device, are separate devices, which means stand-alone devices, which are, in particular, not connected by a wired data connection and have their individual power supply.

The microphone device is preferably not part of the at least one liquid handling devices. The microphone device is preferably arranged remote from the at least one liquid handling device. The microphone device may be a wearable device, which may be a headset. However, in embodiments it is also possible and preferred that the microphone device is part of the liquid handling device.

Preferably, the liquid handling device has a data storage device containing device identification data, which are suitable to unambiguously identify the liquid handling device (or its control device) within a group of many liquid handling devices (and their respective control devices). The device identification data may contain a pipette identification number, in particular a serial number of the liquid handling device or respectively, a pipette device. The device identification data may be used for addressing the liquid handling device in case that multiple liquid handling devices are present within the range of wireless connectable devices of the computer device, or are present within the wireless network. Using the device identification data may allow to unambiguously transfer the control data to the same liquid handling device, which transferred the start signal to the computer device resulting in the detection of said control data. The control device may be programmed to receive the control data and to process the control data, in case, preferably only in case, that the device identification data contained in the control data match with the device identification data of the control device or respectively, the liquid handling device containing said control device. The control device may be programmed to receive the control data and to discard any processing of the control data, in case, preferably only in case, that the device identification data contained in the control data does not match with the device identification data of the control device or respectively, of the liquid handling device containing said control device.

Preferably, the control device is programmed to provide the start signal in the form of start data, which include the device identification data.

Preferably, the computer device is programmed to identify the liquid handling device by extracting the device identification data from the start data, and to send the control data, which is associated with a user speech input and which was extracted from the user speech by running the speech recognition procedure, to the liquid handling device in dependence on the device identification data. Preferably, the device identification data is contained in the control data, which includes that the device identification data is transferred together with the control data to the control device.

Preferably, the speech recognition procedure uses a recognition algorithm for recognizing the at least one function command and for outputting the control data depending on the at least one function command, the recognition algorithm preferably including a neural network or other programmed algorithms. The recognition algorithm may include providing the final output of the speech recognition procedure being the recognized text or commands derived from the spoken input, forming the control data.

The recognition algorithm may include to automatically convert the recognized text into a proper command, which may be done by using a table of data, which correlates the recognized text to a desired command, wherein said table may be stored in a data storage of the computing device or connected to the computing device. The desired command may be a suitable for program-controlled calling a specific function at the control device, for example
- a command used by the control device to switch the screen content shown in a dis-play of the liquid handling device, and/or a command for navigating through the pages of a user interface of the liquid handling device;
- a command used by the control device to start or stop a pipetting process, or to switch off the power of the liquid handling device;
- a command used by the control device to call a pre-defined or user defined and pre-stored method;
- a command used by the control device to eject a pipetting tip connected at a working cone of the liquid handling device.

Preferably, the computer device is part of a pipette manager device, which has a user interface device including a display, in particular a touch screen, and which is configured to receive a user input for setting at least one pipetting parameter and sending the at least one pipetting parameter to the at least one liquid handling device, when the speech control input mode is inactive. The pipette manager device may contain the functionality of already known pipette manager devices, e.g. the Visionize^{®} pipette manager as commercially available from Eppendorf SE, Hamburg, Germany.

Preferably, the computer device is a dedicated computer or server. Preferably, the computer device is part of a smart device, e.g. a tablet PC or a smartphone. Preferably, the computer device is part of another laboratory device for the treatment and/or analysis of at least one liquid sample, e.g. part of a liquid handling apparatus, which is not the liquid handling device according to the invention.

Preferably, the computer device is programmed to end the speech recognition procedure by analyzing user speech data containing the user speech. Preferably, the computer device is programmed to end the speech recognition procedure by analyzing that no sound exceeding a predetermined sound volume or amplitude for a predetermined time period is detected by the microphone device.

Preferably, the at least one liquid handling device is configured to detect the end of the manual user interaction with the actuation device and the computer device is programmed to end the speech recognition procedure and the speech control input mode based on the detection of the end of the manual user interaction. For example, the speech control input mode may be active as long as the actuation device is actuated by the user, for example by pressing a spring loaded activation button/switch for defining the durance of the speech control input mode.

Preferably, the at least one liquid handling device comprises a signal output device and the control device is programmed to output a signal to the user indicating if the speech control input mode is active and/or if the speech control input mode is inactive. The signal output device may be configured to provide the feedback signal.

Preferably, the actuation device comprises any of the following:
- a dedicated button, in particular a spring loaded button,
- a button which is located at a specific position at the casing of a handheld pipetting device, which position is, in particular, at the grip formed by thee housing of the handheld pipetting device.

Preferably, the speech recognition procedure is programmed to recognize a function command taken from the group of preferred function commands including:
- setting a pipetting parameter, which may be any of the following parameters: a pipetting volume, a pipetting volume to be aspirated, a pipetting volume to be dispensed, a number of pipetting steps, a pipetting speed, a number of prewetting steps, a prewetting volume, a number of mixing steps, ....
- setting a digit, including any digit from 0, 1, ...9
- setting a number, including numbers with multiple digits
- switching of a liquid handling device
- ejecting a pipette tip from a working cone of the liquid handling device.

The invention is also directed to the liquid handling device, which is suitable to be the liquid handling device of the system according to the invention, which is, in particular, a handheld pipette device, for handling liquid samples in a laboratory, comprising
* an actuation device for electrically detecting a manual user action,
* a wireless network adapter for exchanging data by wireless connection,
* an electronic control device being programmed to
   - detect an actuation of the actuation device caused by a user action,
   - activate, in response to detecting the actuation, a speech control input mode, during which a speech recognition procedure is activated at a remote computer device to detect a speech input for controlling at least one function of the liquid handling device and during which the control device is capable to receive control data from the remote computer device,
   - provide, in response to detecting the actuation, a start signal suitable for starting the speech recognition procedure,
   - send, via the wireless connection, the start signal to the remote computer device being connected to a microphone device for starting the speech recognition procedure at the remote computer device,
   - preferably: wait for a time period, which is the maximum time period during which the speech control input mode is active before it is deactivated at the end of said time period, for receiving control data,
   - receive, in response to sending the start signal and, in particular, during said time period, the control data from the remote computer device via a wireless connection and
   - control the at least one function of the liquid handling device depending on the control data.

The invention is also directed to the computer device, which is suitable to be the computer device of the system according to the invention, which serves for running a programmed speech recognition procedure, comprising
* a wireless network adapter for exchanging data by wireless connection, the computer device being programmed to
   * receive a start signal via the wireless connection,
   * be triggered by the start signal to start the speech recognition procedure, which is a program controlled procedure and which
      - records a user speech using a microphone device being connected to the computer device, the user speech containing information for controlling at least one function of the liquid handling device,
      - recognizes at least one function command from the user speech and
      - outputs control data depending on the at least one function command,
* the computer device being programmed to send the control data to a liquid handling device via a wireless connection for controlling the at least one function of the liquid handling device depending on the control data.

The invention is also directed to a method for performing a voice control of at least one liquid handling device, in particular handheld pipette device in a laboratory, using a remote computer device connected to a microphone, the at least one liquid handling device comprising an actuation device for electrically detecting a manual user action, a wireless network adapter for exchanging data by wireless connection, and an electronic control device,
* the method comprising the computer implemented steps executed by the electronic control device to
   - detect an actuation of the actuation device caused by a user action,
   - activate, in response to detecting the actuation, a speech control input mode, during which a speech recognition procedure is activated at a remote computer device to detect a speech input for controlling at least one function of the liquid handling device and during which the control device is capable to receive control data from the remote computer device,
   - provide, in response to detecting the actuation, a start signal suitable for starting the speech recognition procedure,
   - send, via the wireless connection, the start signal to the computer device for starting the speech recognition procedure at the computer device,
* the method comprising the computer implemented steps executed by the computer device to
   * receive the start signal via the wireless connection,
   * be triggered by the start signal to start the speech recognition procedure, which is a program controlled procedure and which
      - records a user speech using the microphone device, the user speech containing information for controlling at least one function of the liquid handling device,
      - recognizes at least one function command from the user speech and
      - outputs control data depending on the at least one function command,
   * send the control data to the liquid handling device via a wireless connection,
* the method comprising the computer implemented steps executed by the control device to
   * receive the control data and to
   * control the at least one function of the liquid handling device depending on the control data.

The invention is also directed to a method for controlling at least one function of a liquid handling device, in particular handheld pipette device, the liquid handling device comprising an actuation device for electrically detecting a manual user action, a wireless network adapter for exchanging data by wireless connection, and an electronic control device,
* the method comprising the computer implemented steps executed by the control de-vice to
   - detect an actuation of the actuation device caused by a user action,
   - activate, in response to detecting the actuation, a speech control input mode, during which a speech recognition procedure is activated at a remote computer device to detect a speech input for controlling at least one function of the liquid handling device and during which the control device is capable to receive control data from the remote computer device,
   - provide, in response to detecting the actuation, a start signal suitable for starting the speech recognition procedure,
   - send, via the wireless connection, the start signal to the remote computer device being connected to a microphone device for starting the speech recognition procedure at the remote computer device,
   - preferably: wait for a time period, which is the maximum time period during which the speech control input mode is active before it is deactivated at the end of said time period, for receiving control data,
   - receive, in response to sending the start signal and, in particular, during said time period, the control data from the remote computer device via a wireless connection and
   - control the at least one function of the liquid handling device depending on the control data.

The invention is also directed to a method for controlling at least one function of a liquid handling device, in particular handheld pipette device, using a speech recognition procedure executed by a computer device,
the method comprising the computer implemented steps executed by the computer device to
* receive a start signal via the wireless connection,
* be triggered by the start signal to start a speech recognition procedure, which is a program controlled procedure and which
   - records a user speech using a microphone device being connected to the computer device, the user speech containing information for controlling at least one function of the liquid handling device,
   - recognizes at least one function command from the user speech and
   - outputs control data depending on the at least one function command,
* send the control data to the liquid handling device via a wireless connection for controlling the at least one function of the liquid handling device depending on the control data.

The invention is also directed to a program code for implementing the method according to claim 14 or claim 15 or claim 16. The invention is also directed to a computer program [product] comprising instructions which, when the program is executed by a computer, cause the computer to carry out the methods, or the steps of the method, according to claim 14 or claim 15 or claim 16.

The invention is also directed to a computer-implemented method for performing a speech recognition procedure by determining at least one function command from speech data, containing the steps of:
• speech data being acquired, which contains a digitized sound wave obtained by a microphone device,
• function command data are determined, which contains information on at least one function command for controlling at least one function of a liquid handling device,
wherein the function command data is determined by inputting the speech data into an algorithm which establishes the relation between speech data and function commands, the algorithm being part of a learning algorithm, in particular a neural network or Convolutional Neural Network (CNN), which has been trained for being capable to establish said relation.

Programming parameters to be defined by the speech control input mode

The speech control input mode is useful for a user when defining program parameters, which then may define a more or less complex pipetting method, which may follow a pre-defined operating mode or be a completely user defined method. In particular, defining digits of a number or numbers by speech recognition saves a lot of time, in particular, if a lot of program parameters have to be defined. The invention allows to implement a powerful speech recognition procedure being executed on a powerful computer device being separate from the liquid handling device.

In the following, the operating modes and the operating parameters preferentially assigned to them are described, which are each preferentially provided by the liquid handling device or used by the same. The term "operating parameter" is likewise used with the term "program parameter" or "pipetting parameter":
Preferentially, an operating parameter is provided, with which a volume to be pipetted is defined. An operating parameter can be provided, with which an aspiration volume that is to be aspirated during the aspiration step is defined and/or an operating parameter can be provided, with which a release volume that is to be released during a release step is defined.

Preferentially, at least one operating parameter is provided, with which the number of directly successive or indirectly successive pipetting volumes is determined, preferably at least one operating parameter, with which the number of aspiration steps and/or release steps and preferentially also the respectively assigned pipetting volumes, the respectively assigned pipetting velocities and/or accelerations, and/or the respectively assigned time intervals between the steps are determined.

Preferentially, one operating mode of the liquid handling device, in particular the handheld pipette device, relates to the "dispensing" (DIS) of a sample. Associated operating parameters are, each preferentially: the volume of the single sample, relating to the pipetting volume during one of multiple release steps; the number of the release steps; the speed during the uptake of the sample(s); the speed during the re-lease of the sample(s). The dispensing function is suitable in particular for the rapid filling of a microwell plate with a liquid reagent and can be used e.g. for the execution of an ELISA.

Preferentially, one operating mode relates to the "automated dispensing" (ADS) of a sample. Associated operating parameters are, each preferentially: the volume of the single sample, relating to the pipetting volume during one of multiple release steps; the number of the release steps; the duration of the time interval, according to which the release steps are executed automatically with constant time lags between one after the other - the time interval can determine these time lags or e.g. the delay between the end and the beginning of successive release steps; the speed during the uptake of the sample(s); the speed during the release of the sample(s). This dispensing function is suitable in a more comfortable way for the filling of a microwell plate, as the user does not need to repeatedly trigger a release step by an actuation, e.g. by pressing a button, but the release is carried out in a time controlled way after starting the automated dispensing. In the same way as all other operating programs of an operating mode also the automated dispensing can be carried out under the condition that the corresponding program is carried out at least during an uninterrupted actuation of a control element, e.g. while a button is uninterruptedly held down. This is of advantage for example in long series of dispensing operations or reaction, in which it is required to precisely observe a time window. The automated dispensing function is suitable in a more comfortable way for the filling of a microwell plate, as, in this scenario, the user does not need to trigger an individual release step by an actuation, but the release is carried out automatically, which can be used e.g. for the execution of an ELISA.

Preferentially, one operating mode relates to the "pipetting" (Pip) of a sample. Associated operating parameters are, each preferentially: the volume of the sample to be pi-petted; the speed during the uptake of the sample; the speed during the release of the sample.

Preferentially, one operating mode relates to the "pipetting followed by mixing" (P/Mix) of a sample. Associated operating parameter are, each preferentially: the volume of the sample to be aspirated and/or to be released; the mixing volume; the number of mixing cycles; the speed during the uptake of the sample; the speed during the release of the sample. The function "pipetting followed by mixing" is recommended for the pipetting of very small volumes, for example. If a dosing volume < 10µl is selected, it is recommended to flush it into the corresponding reaction liquid. This can be achieved by automatically starting a mixing movement after the release of the liquid. The mixing volume as well as the mixing cycles are defined earlier. An application of this operating mode is e.g. the release of a liquid that is harder to dose than water because of its physical properties, with its residues in the pipetting container, in particular the pipette tip, being flushed using the present liquid from the pipetting container, resp. the pipette tip. Another application could be the immediate mixing of the released liquid with the pre-sent liquid. This operating mode is of advantage e.g. when DNA is added to a PCR mixing solution.

Preferentially, one operating mode relates to the "repeated uptake" of a sample, also referred to as "inverted dispensing" or as "ASP" for aspirating. Associated operating parameters are, each preferentially: the volume sample(s) to be aspirated; the number of samples; the speed during the uptake; the speed during the release. The function serves for the repeated uptake of an amount of liquid and the release of the total amount. In this, the repeated filling of the pipetting container in one operation is not provided. The speed is the same for all samples. During the execution, preferentially the following occurs: Departing from the home position, the pipetting apparatus takes up a partial volume by actuation of the first kind of the operational control device. After the last partial volume has been taken up, the pipetting apparatus preferentially issues a warning that has to be confirmed by the user preferentially by the actuation of the second kind of operational control device. At the subsequent actuation of the second kind of operational control device, the total volume will be released again. For the actuation of the first or second kind, the operational control device comprises preferentially at least two control buttons, one for the input of a control signal of the "first kind" to the control device, and one for the input of a control signal of the "second kind" to the control device. The operational control device can comprise in particular a rocker switch that can pivot in particular around an axis perpendicular to the long axis of the pipetting apparatus between a first signal trigger position ("rocker switch up") for the actuation of the first kind and a second signal trigger position ("rocker switch down") for the actuation of the second kind.

Preferentially, one operating mode relates to the "diluting" (Dil) of a sample, also referred to as "dilution". Associated operating parameters are, each preferentially: the sample volume; the air bubble volume; the volume of the diluent; the speed of the up-take; the speed of the release. The maximum volume of the diluent = nominal volume - (sample + air bubble). This function serves for the uptake of a sample and of a diluent separated by an air bubble and for the release of the total amount. The speed is the same for all partial volumes. During the execution, preferentially the following occurs: Departing from the home position the pipetting apparatus takes up first the volume of the diluent, then an air bubble and finally the sample. Each uptake is triggered preferentially separately by an actuation of the operational control device of the first kind. Subsequently, the total amount is released entirely.

Preferentially, one operating mode relates to the "sequential dispensing" (SeqD) of samples. Associated operating parameters are, each preferentially: the number of samples (preferentially up to a maximum number Nmax of preferentially 5 <= Nmax <= 15, preferentially Nmax = 10); individual volumes of the individual samples; speed of the uptake; speed of the release. This function serves for the sequential dispensing of Nmax freely selectable volumes, preferentially without multiple filling of the pipetting container. The speed is the same for all samples. The number of samples is preferentially the leading parameter for the input of the individual volumes.. The pipette has to check every time preferentially when entering the volumes, that the maximum volumes of the pipetting apparatuses is not exceeded, if necessary, a warning is issued. After inputting all parameters, the pipetting apparatus takes up the total volume after the actuation of the first kind of the operational control device and releases an individual volume after each actuation of the second kind of the operational control device. All other operations are executed preferentially like the normal dispensing.

Preferentially, one operating mode relates to the "sequential pipetting" (SeqP) of samples. Associated operating parameters are, each preferentially: the number of samples (preferentially up to a maximum number Nmax of preferentially 5 <= Nmax <= 15, preferentially Nmax = 10); individual volumes of the individual samples; speed of the uptake; speed of the release. This function serves for the pipetting of a maximum Nmax of freely selectable volumes that are programmed before the start and that are immutable in their succession. The speed is preferentially the same for all samples in order to allow for a simple handling of this operation mode. The speed can also be set variably. The execution of the function corresponds to the execution of the pipetting. The previously entered volumes are processed in the programmed sequence. After the re-lease, the actuation of a control element, e.g. by pressing a button, decides whether the next sample should be taken up or whether before the next sample is taken up a "blowout", i.e. a complete, safe blow-out of the sample still contained in the pipetting container by means of an overstroke, and/or whether the pipetting container should be changed.

Preferentially, one operating mode relates to the "reverse pipetting" (rPip) of samples. Associated operating parameters are, each preferentially: the volume of the individual sample; the speed of the uptake; the speed of the release; activation of the counters. For this function "rPip" more than the volume to be dosed is taken up. This is achieved by lowering the piston before the uptake of liquid, namely by an actuation of the second kind, i.e. e.g. by pressing a button or "rocker switch down", into the lower position of a blow-out, thus a overstroke of the piston which exceeds the position of the piston in a pipetting stroke. At the start of the uptake of volume the pipetting apparatus takes up the volume of the blowout and the selected volume. In order to account for the backlash of the drive in release direction, the pipetting apparatus performs an additional stroke, which is immediately released again. This resembles the dispensing, but it occurs preferentially with an automated release of the disposal stroke with maximum speed.

During the execution of the operating mode "rPip", preferentially the following occurs: the piston of the pipetting apparatus moves automatically to the blow-out and remains in the lower position. Secondly, an actuation of the first kind of the operational control device occurs: the piston moves up by the blow-out distance and by the stroke of the pipetting volume. Thirdly, an actuation of the second kind of the operational control device occurs: the piston moves down by the stroke of the pipetting volume and stops before the blowout. Fourthly, two actuations of the second kind of the operational control device occur: the piston performs the blow-out and remains in the lower position. Alternatively to "fourthly", an actuation of the first kind of the operational control device occurs: the piston moves up by the pipetting stroke. The mode "rPip" is suitable in particular for the pipetting of plasma, sera and other liquids with a high content of proteins. For aqueous solutions, in particular the mode "pipetting" is suitable. The mode "rPip" is suitable in particular for solutions containing surfactants, in order to minimize the foam formation during the release into the target container. The liquid is taken up in particular with an overstroke (blow-out volume). Here, the overstroke is generally not part of the release volume and is preferentially not released into the tar-get container. In particular if the same sample is to be used again, the overstroke can remain in the pipette tip. If another liquid is used, the overstroke and/or preferentially the pipetting container is disposed of.

A set of operating parameters preferentially controls a control program for the execution of the desired pipetting operation. The control program can in each case be provided in the form of electric circuits of the control device, and/or be provided by executable program code suitable for controlling a control device, which is controllable by program code and preferentially programmable.

The system, the liquid handling device, the computer device and the methods according to the invention are applicable, for example, in research or industry related to pharmacy, biomedical sciences, biotechnology, in particular plant biotechnology, microbiology, chemistry or nanotechnology.

Further preferred configurations of the system, the computer device and the liquid handling device according to the invention and the methods according to the invention emerge from the following description of the exemplary embodiments in conjunction with the figures and the description thereof. If nothing else is described or if nothing else emerges from the context, the same components of the exemplary embodiments are substantially characterized by the same reference signs. In detail:
Fig. 1 shows a liquid handling device being a handheld pipette according to an embodiment of the invention.
Fig. 2a shows a system according to an embodiment of the invention.
Fig. 2b shows a system according to an embodiment of the invention.
Fig. 3 shows a system according to an embodiment of the invention.
Fig. 4 schematically shows an example of the method according to the invention using the system according to the invention.

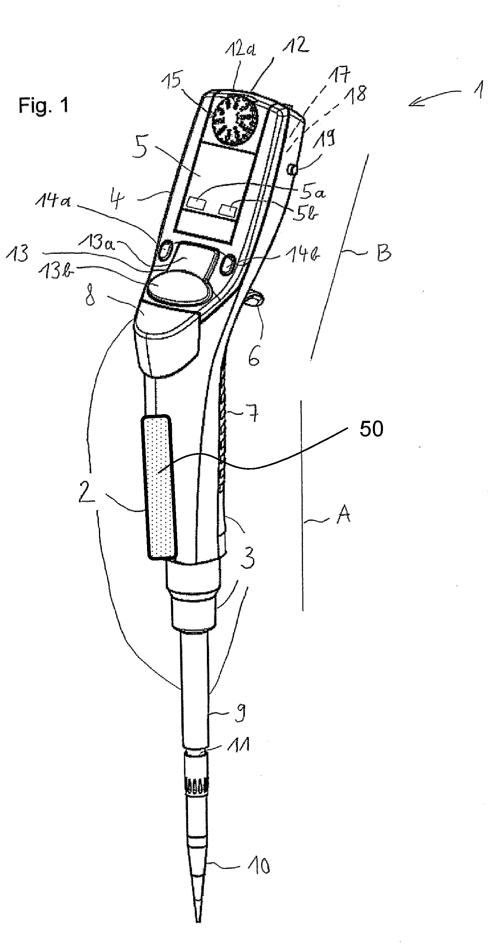

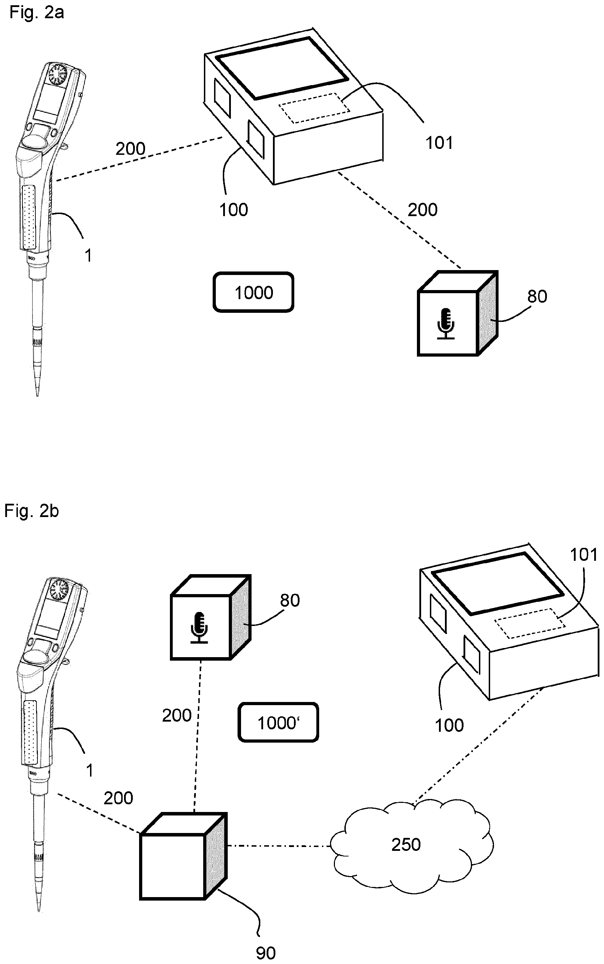

Fig. 1 depicts the liquid handling device 1 for performing a voice control of at least one liquid handling device, in particular handheld pipette device, according to an embodiment of the invention, which here is a hand-held electric piston-stroke pipette 1, in a perspective view. With the pipette 1, the stroke of the piston is electrically driven. The activation of the stroke in the different operating modes of the pipette is electrically controlled by an electronic control device 17 with a connected storage device, inside the pipette 1. The control device 17 comprises, as the wireless network adapter 18, a radio (WiFi) module in order to exchange data with an external computer device (see fig. 2) via a wireless LAN connection.

The operating parameter (program parameter) and other setting of the pipette can be controlled by the user via the user interface device, resp. the operational control device and the display of the pipette. For the purpose of detecting a user action and activating, in response to detecting the actuation, a speech control input mode, the pipette 1 comprises the actuation device 50, which is a spring-loaded button 50 at the front of the housing of the pipette.

In the pipette 1, several electrically controlled pipetting programs are stored, in which a pipetting program, corresponding to a pipetting method, is assigned preferentially to each operating mode. A pipetting program can be uniquely defined by a set of operating parameters. Once defined, the pipetting program can be triggered by the user and is started automatically by the pipette. The pipetting program comprises in particular that a pipetting method is executed.

The pipette 1 comprises a base body 2 which comprises a lower shaft section 3 and an upper section 4, which comprises in particular the display 5 and the control elements. The control section 3 extends parallel to the long axis A of the pipetting apparatus, whereas the upper section 4 is inclined to the axis A and extends parallel to the axis B. By the inclined arrangement of the upper section 4, it is possible to use the display in a very ergonomic way.

The pipette 1 comprises a handle section 7 with the holding flap 6 that rests on the index of the user when the pipette 1 is held by the user as intended, whereas the handle section 7 rests in the palm of the user. The thumb can reach in particular the eject button 8, which, when pressed down along the axis A, moves the spring-loaded ejection sleeve 9 downwards and ejects the pipette tip 10 from the nose cone 11 of the pipet-ting apparatus onto which it is clipped. The ejection mechanism can also be electronically driven. The pipette 1 comprises a metallic contact protrusion 19 on each side of the upper section 4, which serves for the charging of the integrated battery, which constitutes the energy storage of the electric pipette. The thumb can also reach in particular the actuation device 50.

The operational control unit (12; 13; 14a; 14b) (also referred to as user interface apparatus/device) comprises a dial 12, a rocker switch 13 and a first control button 14a and a second control button 14b, as well as the actuation device 50. The electronic control device is located inside the base body 2 and is connected to the operational control unit, and is in particular connected to the actuation device 50.

The electronic control device is programmed to
- detect an actuation of the actuation device 50 caused by a user action,
- activate, in response to detecting the actuation, a speech control input mode, during which a speech recognition procedure is activated at the computer device to detect a speech input for controlling at least one function of the liquid handling device and during which the control device is capable to receive control data from the remote computer device,
   - provide, in response to detecting the actuation, a start signal and send, via the wireless connection, the start signal to the computer device for starting the speech recognition procedure at the computer device,
   - receive, after the speech recognition procedure was completed, control data from the computer device and
   - define at least one program parameter using the control data.

The disk-like dial 12 is rotatably mounted on the base body 2, in particular parallel to the essentially flat front face of the upper section 4. The dial 12 comprises a number of detents that corresponds to the number of selectable positions of the dial. In particular, the detents are such that a mark 12a for designating the set position of the dial 12 can be aligned with the mark 15, which is fixed to the base body 2 on the front of the upper section 4.

The color display 5 serves as the central information element for the user. In particular, the various operating modes of the pipette 1 are displayed there and the parameter values of the operating parameter are displayed. In each of the two areas 5a and 5b, information is displayed that tells the user which function is associated to the first control button 14a resp. the second control button 14b on the currently displayed display page if a function is associated to it also on the respective display page. Every control button is thus designed as a control element with variable functionality and is termed as a "soft-key" in combination with the displayed function.

The actuation device 50 is a dedicated button and is not a "soft-key" in the present embodiment. The user may observe in the display 5, if his user speech input is correctly recognized to form the desired digit, for example, in case that the speech recognition is used to define the digits of a number, which defines the value of a program parameter, for example the value of the user parameter "sample volume to be aspirated".

Preferentially, the pipetting apparatus is designed to switch between the various functionalities of a soft-key if a certain operating mode of the pipette 1 is selected. This can be achieved, for example, by double clicking the soft-key or by holding the soft-key for a minimum amount of time, for example for 2 seconds.

Preferentially for every operating mode of the pipette 1, a display page that is dis-played on the display is provided with the layout specific for the operating mode. Also for the definition of at least one prewetting step, a display page can be provided. If adjustable operating parameter or other mutable entries are provided on the display page, they can be marked using the control rocker switch 13 and, in particular, be selected with the control button 14a. In this case, the control button 14a has the functionality "selection" and the text "select" is shown in the display at the position 5a. Changing the parameter values of an operating parameter or changing the selection or an entry is achieved by the actuation of the rocker switch 13.

The rocker switch 13 is arranged on the base body so that it can pivot around an axis that is arranged perpendicularly to the long axis A. If the uses presses the upper range 13a a first function of the rocker switch 13 is activated, if the user presses the lower range 13b a second function of the rocker switch 13 is activated. The rocker switch is mounted such that no function is triggered if it is not presses. The rocker switch 13 serves, in particular in a manual operating mode of the pipette, for aspirating the sample to be pipetted into the pipette tip 10 while the user presses the upper range 13a and serves furthermore for releasing the sample from the pipette tip 10 while the user presses the lower range 13b.

The pipette 1 can be operated in different operating modes that have been explained above in detail. A first number of operating modes can be selected directly via the dial 12, a second number of operating modes can be selected with multiple selectable entries via a display page that is labeled as "special" resp. "Spc", in which each entry describes an operating mode. Within each of the operating modes being adjusted by the dial 12, the actuation device/ button 50 may be used to start the speech control input mode and to define one or more program parameters.

Figure 2a schematically shows a system 1000 according to an embodiment of the invention. The system includes the pipette 1, the computer device 100, and a microphone device 80, wherein all of said parts may be located in the same laboratory room, but separate.

The pipette 1 and the computer device 100 as well as the microphone device 80 and the computer device 100 may be connected via a WLAN 200. The WLAN may be established by the computer device 100, which may act as a WLAN access point. Alternatively, the pipette 1 and the computer device 100 as well as the microphone device 80 and the computer device 100 may be connected wireless in an alternative way. The microphone device 80 and the computer device 100 may be connected by a wired connection as an alternative.

Figure 2b schematically shows a system 1000' according to an alternative embodiment of the invention, wherein the liquid handling device 1 is connected to the computer device 100 via a router 90 and an external network 250, for example the internet 250. The system includes the pipette 1, the computer device 100, and a microphone device 80, wherein the pipette 1 and the microphone device 80 may be located in the same laboratory room, but separate. The pipette 1 and the router 90 as well as the microphone device 80 and the router 90 may be connected via a WLAN 200. The router may comprise a computing device. The router may be part of a computing device, for example be part of a pipetting manager. The WLAN may be established by the router 90, which may act as a WLAN access point. The microphone device 80 may be part of the computing device 90 or router 90, respectively.

The system 1000 or 1000', respectively, is configured for performing a voice control of at least one liquid handling device 1, in particular handheld pipette device 1, in a laboratory, comprising:
* the at least one liquid handling device 1,
* a microphone device 80,
* a computer device 100 being connected to the microphone device,
   the computer device 100 and the microphone device 80 being arranged remote from the at least one liquid handling device,
   the at least one liquid handling device 1 comprising
* an actuation device 50 for electrically detecting a manual user action,
* a wireless network adapter 18 for exchanging data by wireless connection,
* an electronic control device 17 being programmed to
   - detect an actuation of the actuation device 50 caused by a user action,
   - activate, in response to detecting the actuation, a speech control input mode, during which a speech recognition procedure is activated at the computer device 100 to detect a speech input for controlling at least one function of the liquid handling device 1 and during which the control device 17 is capable to receive control data from the remote computer device 100,
   - provide, in response to detecting the actuation, a start signal and send, via the wireless connection 200, the start signal to the computer device 100 for starting the speech recognition procedure at the computer device 100,
      the computer device 100 comprising a wireless network adapter 101 for exchanging data by wireless connection and being programmed to
* receive the start signal via the wireless connection 200,
* be triggered by the start signal to start the speech recognition procedure, which is a program controlled procedure and which
   - records a user speech using the microphone device, the user speech containing information for controlling at least one function of the liquid handling device,
   - recognizes at least one function command from the user speech and
   - outputs control data depending on the at least one function command,
      the computer device 100 being programmed to send the control data to the liquid handling device 1 via a wireless connection 200, and the control device 17 of the liquid handling device 1 being programmed to receive the control data and to control the at least one function of the liquid handling device 1 depending on the control data.

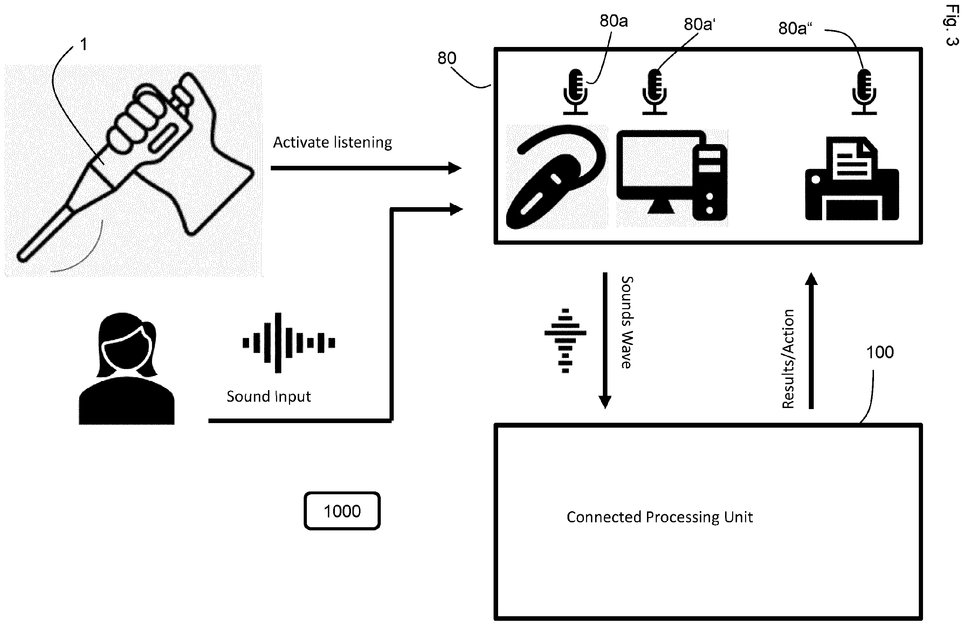

Figure 3 is another schematic view of an embodiment of the system 1000 according to the invention, which uses the same reference numerals as in case of Figure 2a. Multiple microphones 80a, 80a', 80a" may be provided here to implement the microphone device 80, the microphones being arranged for example at different locations in a laboratory for guaranteeing recording of a high quality sound wave, which is particularly suitable for running the speech recognition procedure.

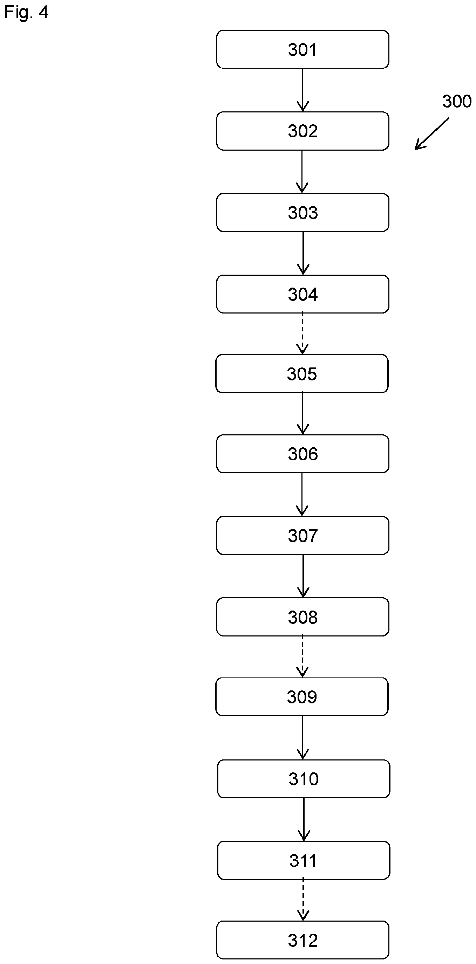

Figure 4 shows the
Method 300 for performing a voice control of at least one liquid handling device 1, in particular handheld pipette device 1 in a laboratory, using a remote computer device 100 connected to a microphone device 80, the at least one liquid handling device 1 comprising an actuation device 50 for electrically detecting a manual user action, a wireless network adapter 18 for exchanging data by wireless connection, and an electronic control device 17,
* the method 300 comprising the computer implemented steps executed by the electronic control device 17 to
   - detect an actuation of the actuation device 50 caused by a user action; (step 301)
   - activate, in response to detecting the actuation, a speech control input mode, during which a speech recognition procedure is activated at a remote computer device to detect a speech input for controlling at least one function of the liquid handling device and during which the control device is capable to receive control data from the remote computer device; (step 302)
   - provide, in response to detecting the actuation, a start signal suitable for starting the speech recognition procedure; (step 303)
   - send, via the wireless connection, the start signal to the computer device for starting the speech recognition procedure at the computer device, (step 304)
* the method comprising the computer implemented steps executed by the computer device 100 to
   * receive the start signal via the wireless connection; (step 305)
   * be triggered by the start signal to start the speech recognition procedure (step 306), which is a program controlled procedure and which
      - records a user speech using the microphone device 80, the user speech containing information for controlling at least one function of the liquid handling device, (step 307)
      - recognizes at least one function command from the user speech (step 308) and
      - outputs control data depending on the at least one function command (step 309),
   * send the control data to the liquid handling device via a wireless connection; (step 310)
* the method comprising the computer implemented steps executed by the control device 17 to
   * receive the control data (step 311) and to
   * control the at least one function of the liquid handling device depending on the control data (step 312).

## Claims

1. System (1000; 1000') for performing a voice control of at least one liquid handling device (1), in particular handheld pipette device, in a laboratory, comprising:
* the at least one liquid handling device (1),
* a microphone device (80),
* a computer device (100) being connected to the microphone device,
the computer device, and preferably the microphone device, being arranged remote from the at least one liquid handling device,
the at least one liquid handling device comprising
* an actuation device (50) for electrically detecting a manual user action,
* a wireless network adapter (18) for exchanging data by wireless connection (200),
* an electronic control device (17) being programmed to
- detect an actuation of the actuation device caused by a user action,
- activate, in response to detecting the actuation, a speech control input mode, during which a speech recognition procedure is activated at the computer device to detect a speech input for controlling at least one function of the liquid handling device and during which the control device is capable to receive control data from the remote computer device,
- provide, in response to detecting the actuation, a start signal and send, via the wireless connection, the start signal to the computer device for starting the speech recognition procedure at the computer device,
the computer device (100) comprising a wireless network adapter (101) for exchanging data by wireless connection and being programmed to
* receive the start signal via the wireless connection,
* be triggered by the start signal to start the speech recognition procedure, which is a program controlled procedure and which
- records a user speech using the microphone device, the user speech containing information for controlling at least one function of the liquid handling device,
- recognizes at least one function command from the user speech and
- outputs control data depending on the at least one function command,
the computer device (101) being programmed to send the control data to the liquid handling device via a wireless connection (200), and the control device of the liquid handling device (1) being programmed to receive the control data and to control the at least one function of the liquid handling device depending on the control data.

2. System according to claim 1, wherein the liquid handling device has a data storage device containing device identification data, which are suitable to unambiguously identify the liquid handling device within a group of many liquid handling devices,
the control device being programmed to provide the start signal in the form of start data, which include the device identification data, and
the computer device being programmed to identify the liquid handling device by extracting the device identification data from the start data, and to send the control data to the liquid handling device in dependence on the device identification data.

3. System according to any of the previous claims, wherein the speech recognition procedure uses a recognition algorithm for recognizing the at least one function command and for outputting the control data depending on the at least one function command, the recognition algorithm including a neural network.

4. System according to any of the previous claims, wherein the computer device is part of a pipette manager device, which has a user interface device including a display, in particular a touch screen, and which is configured to receive a user input for setting at least one pipetting parameter and sending the at least one pipetting parameter to the at least one liquid handling device, when the speech control input mode is inactive.

5. System according to any of the previous claims, wherein the computer device is a dedicated server, is part of a smart device, e.g. a tablet PC or a smart phone, or part of another laboratory device for the treatment and/or analysis of at least one liquid sample.

6. System according to any of the previous claims, wherein the computer device is programmed to end the speech recognition procedure by analyzing user speech data containing the user speech.

7. System according to any of the previous claims, wherein the computer device is programmed to end the speech recognition procedure by analyzing that no sound exceeding a predetermined sound volume for a predetermined time period is detected by the microphone device.

8. System according to any of the previous claims, wherein the at least one liquid handling device is configured to detect the end of the manual user interaction with the actuation device and the computer device is programmed to end the speech recognition procedure and the speech control input mode based on the detection of the end of the manual user interaction.

9. System according to any of the previous claims, wherein the at least one liquid handling device comprises a signal output device and the control device is programmed to output a signal to the user indicating if the speech control input mode is active and/or if the speech control input mode is inactive.

10. System according to any of the previous claims, wherein the actuation device comprises any of the following:
- a dedicated button, in particular a spring loaded button,
- a button which is located at a specific position at the casing of a handheld pipetting device.

11. System according to any of the previous claims, wherein the speech recognition procedure is programmed to recognize a function command taken from the group of preferred function commands including:
- setting a pipetting parameter, which may be any of the following parameters: a pipetting volume, a pipetting volume to be aspirated, a pipetting volume to be dispensed, a number of pipetting steps, a pipetting speed, a number of prewetting steps, a prewetting volume, a number of mixing steps, ....
- setting a digit, including any digit from 0, 1, ...9
- setting a number, including numbers with multiple digits
- switching of a liquid handling device
- ejecting a pipette tip from a working cone of the liquid handling device.

12. Liquid handling device, in particular handheld pipette device, for handling liquid samples in a laboratory, comprising
* an actuation device for electrically detecting a manual user action,
* a wireless network adapter for exchanging data by wireless connection,
* an electronic control device being programmed to
- detect an actuation of the actuation device caused by a user action,
- activate, in response to detecting the actuation, a speech control input mode, during which a speech recognition procedure is activated at a remote computer device to detect a speech input for controlling at least one function of the liquid handling device and during which the control device is capable to receive control data from the remote computer device,
- provide, in response to detecting the actuation, a start signal suitable for starting the speech recognition procedure,
- send, via the wireless connection, the start signal to the remote computer device being connected to a microphone device for starting the speech recognition procedure at the remote computer device,
- preferably: wait for a time period, which is the maximum time period during which the speech control input mode is active before it is deactivated at the end of said time period, for receiving control data,
- receive, in response to sending the start signal and, in particular, during said time period, the control data from the remote computer device via a wireless connection and
- control the at least one function of the liquid handling device depending on the control data.

13. Computer device for running a speech recognition procedure, comprising
* a wireless network adapter for exchanging data by wireless connection
* the computer device being programmed to
* receive a start signal via the wireless connection,
* be triggered by the start signal to start the speech recognition procedure, which is a program controlled procedure and which
- records a user speech using a microphone device being connected to the computer device, the user speech containing information for controlling at least one function of the liquid handling device,
- recognizes at least one function command from the user speech and
- outputs control data depending on the at least one function command,
* the computer device being programmed to send the control data to a liquid handling device via a wireless connection for controlling the at least one function of the liquid handling device depending on the control data.

14. Method (300) for performing a voice control of at least one liquid handling device (1), in particular handheld pipette device (1) in a laboratory, using a remote computer device (100) connected to a microphone device (80), the at least one liquid handling device (1) comprising an actuation device (50) for electrically detecting a manual user action, a wireless network adapter (18) for exchanging data by wireless connection, and an electronic control device (17),
* the method (300) comprising the computer implemented steps executed by the electronic control device (17) to
- detect an actuation of the actuation device (50) caused by a user action; (301)
- activate, in response to detecting the actuation, a speech control input mode, during which a speech recognition procedure is activated at a remote computer device to detect a speech input for controlling at least one function of the liquid handling device and during which the control device is capable to receive control data from the remote computer device; (302)
- provide, in response to detecting the actuation, a start signal suitable for starting the speech recognition procedure; (303)
- send, via the wireless connection, the start signal to the computer device for starting the speech recognition procedure at the computer device, (304)
* the method comprising the computer implemented steps executed by the computer device (100) to
* receive the start signal via the wireless connection; (305)
* be triggered by the start signal to start the speech recognition procedure (306), which is a program controlled procedure and which
- records a user speech using the microphone device, the user speech containing information for controlling at least one function of the liquid handling device, (307)
- recognizes at least one function command from the user speech (308) and
- outputs control data depending on the at least one function command (309),
* send the control data to the liquid handling device via a wireless connection; (310)
* the method comprising the computer implemented steps executed by the control device (17) to
* receive the control data (311) and to
* control the at least one function of the liquid handling device depending on the control data (312).

15. Method for controlling at least one function of a liquid handling device, in particular handheld pipette device, the liquid handling device comprising an actuation device for electrically detecting a manual user action, a wireless network adapter for exchanging data by wireless connection, and an electronic control device,
* the method comprising the computer implemented steps executed by the control device to
- detect an actuation of the actuation device caused by a user action,
- activate, in response to detecting the actuation, a speech control input mode, during which a speech recognition procedure is activated at a remote computer device to detect a speech input for controlling at least one function of the liquid handling device and during which the control device is capable to receive control data from the remote computer device,
- provide, in response to detecting the actuation, a start signal suitable for starting the speech recognition procedure,
- send, via the wireless connection, the start signal to the remote computer device being connected to a microphone device for starting the speech recognition procedure at the remote computer device,
- preferably: wait for a time period, which is the maximum time period during which the speech control input mode is active before it is deactivated at the end of said time period, for receiving control data,
- receive, in response to sending the start signal and, in particular, during said time period, the control data from the remote computer device via a wireless connection and
- control the at least one function of the liquid handling device depending on the control data.

16. Method for controlling at least one function of a liquid handling device, in particular handheld pipette device, using a speech recognition procedure executed by a computer device,
the method comprising the computer implemented steps executed by the computer device to
* receive a start signal via the wireless connection,
* be triggered by the start signal to start a speech recognition procedure, which is a program controlled procedure and which
- records a user speech using a microphone device being connected to the computer device, the user speech containing information for controlling at least one function of the liquid handling device,
- recognizes at least one function command from the user speech and
- outputs control data depending on the at least one function command,
* send the control data to the liquid handling device via a wireless connection for controlling the at least one function of the liquid handling device depending on the control data.

17. Program code for implementing the method according to claim 14 or claim 15 or claim 16.
